# EUROPEAN PATENT APPLICATION

(11) **EP 2 293 284 A1**
(43) Date of publication of application: **09.03.2011**
(21) Application number: 09168851.5
(22) Date of filing: 27.08.2009
(51) Int. Cl.: G09G 3/36

(54) **Display**

(71) Applicant: Sinitec Vertriebsgesellschaft mbH, 80807 München (DE)
(72) Inventor: Chen, Wen Shih, 115, Taipei (TW)
(74) Representative: Epping, Wilhelm

(57) **Abstract**

Display (10) with a housing (12) and a panel (18). The panel (18) is fixedly arranged inside the housing (12) and comprises a front pane (26). The front pane (26) is designed for the presentation of a picture being visible in a room area (34) in front of the front pane (26). A sensor (32) is fixedly coupled to the housing (12) or to the panel (18). The sensor (32) is arranged in the room area (34) in front of the front pane (26) and is designed to receive the intensity of at least one spectral radiation component (30) of the picture emitted by the panel (18).

## Description

The invention relates to a display which is for example used for television or a personal computer. Such displays may loose luminosity during their lifetime.

The object of the invention is to create a display with a constant luminosity during the whole lifetime of the display.

The objects are achieved by the features of the independent claim. Advantageous embodiments of the invention are given in the sub-claims.

The invention is distinguished by a display with a housing and a panel. The panel is fixedly arranged inside the housing and comprises a front pane. The front pane is designed for the presentation of a picture being visible in a room area in front of the front pane. A sensor is fixedly coupled to the housing or to the panel. The sensor is arranged in the room area in front of the front pane and is designed to receive the intensity of at least one spectral radiation component of the picture emitted by the panel.

In particular, the sensor is an integrated part of the display, and is positioned in an area in which the picture emitted by the display may be seen totally or at least partially.

This has the advantage that the luminosity of the at least one spectral radiation component may be kept constant during the whole life-time of the display by directly controlling the luminosity of the picture as it can be seen by the viewer.

In an advantageous embodiment the sensor is arranged on a front surface of the front pane. By this the sensor may receive the radiation of the display in an undisturbed manner without shading and not being influenced by an obstacle.

In a further advantageous embodiment the housing comprises a frame. The panel is arranged inside the frame and the sensor is arranged on the frame. This has the advantage that the whole front surface of the panel may be used by the viewer in an undisturbed manner and without obstacles.

In a further advantageous embodiment the panel comprises a plurality of pixels. Each of the pixels comprises base colour pixels for the emission of three base colours. The sensor is designed to receive the intensity of the spectral radiation component of at least one of the three base colours of the picture. By this the luminosity of one or more of the three base colours may be kept constant during the whole life-time of the display.

In a further advantageous embodiment the panel comprises a plurality of pixels. Each of the pixels comprises base colour pixels for the emission of three base colours. The sensor is designed to receive the intensity of the sum of the spectral radiation components of the three base colours of the picture. By this the luminosity of the sum of the spectral radiation components of the three base colours may be kept constant during the whole life-time of the display.

In a further advantageous embodiment the panel comprises a plurality of pixels. The pixels are designed for the emission of a mixing colour. The sensor is designed to receive the intensity of the radiation component of the mixing colour of the picture. In particular, the mixing colour may be the colour "white" which may be preferably used in black-white displays. This has the advantage that the luminosity of the mixing colour may be kept constant during the whole life-time of the display.

In a further advantageous embodiment the sensor is arranged and designed to receive the intensity of the visible radiation of a surrounding area of the display. This has the advantage that the luminosity of the panel may be adapted to the luminosity of the surrounding area of the display.

In a further advantageous embodiment the display has a signal input which is designed for the input of a video signal, and a control unit. The control unit is electrically coupled with the signal input and is designed to control the luminosity of the panel depending on the video signal. The sensor is designed for the output of at least one output signal being representative for the intensity of the at least one spectral radiation component of the picture and/or for the intensity of the visible radiation of the surrounding area of the display. The sensor is electrically coupled to the control unit. The control unit is designed to control the panel depending on the at least one output signal of the sensor.

By this the luminosity of the panel may be kept constant after the start or an operation break of the display.

In a further advantageous embodiment the panel is a liquid crystal panel.

Exemplary embodiments of the invention are explained in the following with the aid of schematic drawings. These are as follows:
- Figure 1: an embodiment of a display in a perspective view,
- Figure 2: an enlarged representation of an embodiment of a panel of the display in a schematic view,
- Figure 3: a further enlarged representation of the panel in a sectional view, and
- Figure 4: a control unit and the panel of the display in a schematic view.

Elements of the same design and function that occur in different illustrations are identified by the same reference character.

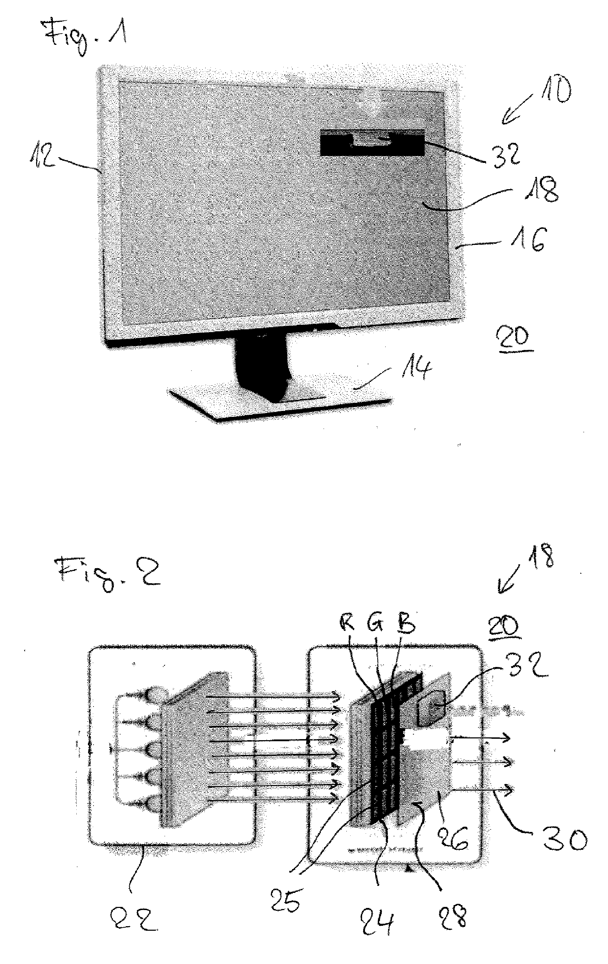

Figure 1 shows a display 10. In the presented advantageous embodiment the display 10 is designed as a flat screen display. In further embodiments the display 10 may be carried out in further manners known by a person skilled in the art.

The display 10 has a housing 12 which is mechanically coupled to a base 14. The base 14 carries the display 10. The housing 12 has a frame 16. A panel 18 is fixedly arranged inside the frame 16. In the shown advantageous embodiment of the display 10 the panel 18 is a liquid crystal panel.

The display 10 is arranged in a surrounding area 20.

Figure 2 shows the panel 18 which is designed as a liquid crystal panel in an enlarged representation. The panel 18 designed as a liquid crystal panel has a background lightning 22. Radiation emitted by the background lightning 22 is received by a liquid crystal cell 24. The liquid crystal cell 24 comprises a plurality of pixels 25. In the shown embodiment the pixels 25 comprise basic colour pixels R, G, B, which are in particular designed for the emission of the three basic colours red, green and blue. By applying a voltage to the pixels 25 of the crystal liquid cell 24 the direction of polarization of the pixels 25 may be changed individually. By this a transmission of the radiation of the background lightning 22 or a shading of the radiation of the background lightning 22 can be obtained for the basic colour pixels R, G, B.

The panel 18 furthermore has a front pane 26 with a front surface 28. The front pane 26 may present a picture. The front pane 26 is designed for the transmission of at least one spectral radiation component 30. The spectral radiation component 30 is a portion of the visible spectrum of the light.

In the embodiment of the display 10 shown in Figure 2 the front pane 26 comprises a sensor 32 which is arranged on the front surface 28. By this, the sensor 32 is fixedly coupled to the panel 18. The functions of the sensor 32 will be described in the following in detail.

In the embodiment of the display 10 shown in Figure 1 the sensor 32 is fixedly arranged on the frame 16. By this, the sensor 32 is fixedly coupled to the housing 12.

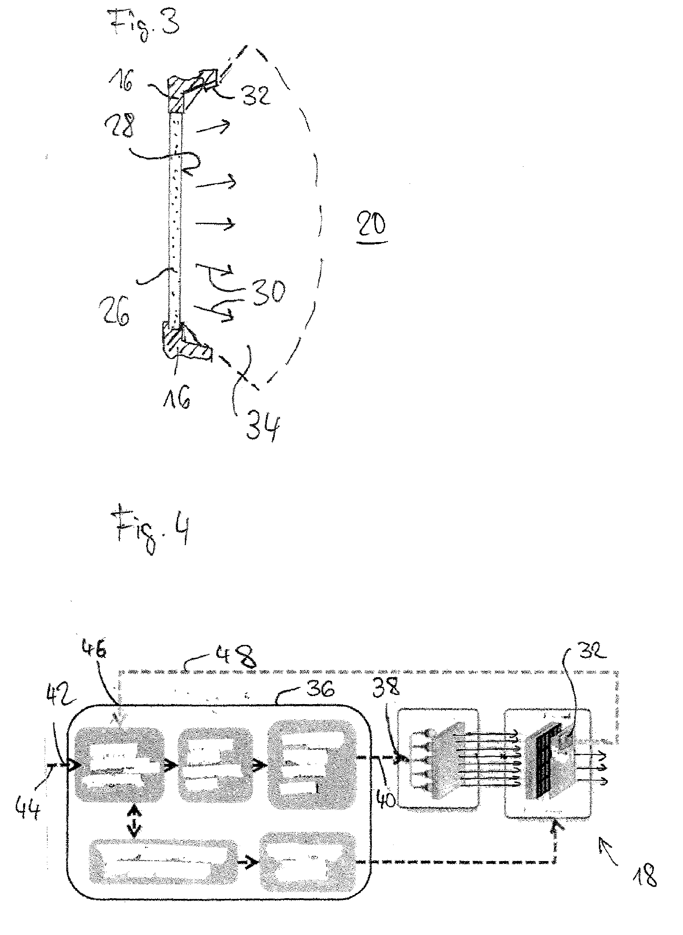

Figure 3 shows a schematic view of a part of the display 10. The panel 18 is emitting visible spectral radiation components 30 of the picture through the front surface 28 of the front pane 26 into a room area 34 in front of the front pane 26. The room area 34 in front of the front pane 26 is the area in which a viewer may watch the picture on the panel 18. This means that the picture presented by the panel 18 may be visible in the whole room area 34 in front of the front pane 26.

In the embodiment of the display 10 shown in Figure 1 the sensor 32 is fixedly arranged on the frame 16.

The sensor 32 may receive the intensity of at least one component 30 of the visible radiation of the picture emitted by the panel 18. Furthermore, the sensor 32 may preferably receive the intensity of the visible radiation of a surrounding area 20 of the display 10.

In a preferred embodiment the sensor 32 can receive the intensity of one of the three basic colours of the radiation components 30 of the picture emitted by the panel 18.

In a further preferred embodiment the sensor 32 may receive the intensity of the sum of the emitted spectral radiation components 30 of the picture emitted by the panel 18. In particular, the sensor 32 may receive the intensity of the sum of the emitted spectral radiation components 30 of the basic colour pixels R, G, B.

In a further preferred embodiment the pixels 25 are designed for the emission of a mixing colour. In this case it is advantageous if the sensor 32 may receive the emitted spectral radiation components 30 of the picture emitted by the panel 18. In particular, the mixing colour may be the colour "white". This colour is preferably used with black-white panels.

Figure 4 shows the panel 18 and a control unit 36. The panel 18 is electrically coupled to the control unit 36 by control lines and a signal input 38. A video signal 40 from the control unit 36 can reach the panel 18 via the signal input 38. The control unit 36 may control the luminosity of the panel 18 depending on the properties of the video signal 40.

The control unit further comprises a PC input 42. A PC signal 44 can reach the control unit 36 for the controlling of the panel 18 via the PC input 42.

The control unit 36 comprises a further signal input 46. An output signal 48 of the sensor 32 can reach the control unit 36 by the further signal input 46. The output signal 48 of the sensor 32 or the output signals 48 of the sensor 32 respectively are representative for the intensity of the spectral radiation components 30 of the picture emitted by the panel 18 and/or for the intensity of the visible radiation of the surrounding area 20 of the display 10. The control unit 36 may control the luminosity of the panel 18 depending on the at least one output signal 48 of the sensor 32.

The panel 10 according to the invention has the advantage that the total luminosity of the radiation components 30 or the luminosity of one or more of the basic colours red, green or blue emitted by the display 10 may have a high stability over the lifetime of the display 10. Depending from the output signal 48 of the sensor 32 with a value which is a measure for the intensity of the radiation components 30 emitted by the panel 18 via the front surface 28 of the front panel 26 the pixels 25 and/or the basic colour pixels R, G, B may be controlled by the control unit 36. By this a high stability of the total luminosity or a high stability of the luminosity of one or more of the basic colours red, green or blue may be obtained over the lifetime of the display 10.

By receiving the intensity of the visible radiation of the surrounding area 20 of the display 10 it is possible to control the pixels 25 and/or the basic colour pixels R, G, B. Therefore, the intensity of the radiation components 30 of the picture may be adapted depending on the intensity of the lightning of the surrounding area 20 of the display 10.

A further advantage of the display 10 is that in view of professional applications such as medical, CAD/CAM and/or graphic applications, there is a high capability to maintain a very good image performance consistently over the lifetime of the display 10. In particular, a stabilization of the real time brightness over the lifetime of the display 10 is possible. Furthermore, a control of the colour chromaticity in a very narrow tolerance band is possible. Furthermore, an adjustment of the display 10 as a function of the illumination in the surrounding area 20 is possible. Finally, it is possible to verify and recalibrate the gamma curve and to obtain the standards of digital imaging and communications in medicine (DICOM). DICOM is a standard to adjust the Gray scale tone characteristics of displays used in the medical field.

An image performance track in the calibration may be carried out without additional hardware or further tools. An incorporated luminance and colour engine may automatically adjust related parameters. A stabilization of luminance may be possible within a very short time period of for example a few seconds after the start-up of the display 10. Image luminance drift problems during a warm-up period of the panel 18 may be avoided. The luminance output value may be set according to the preference of the end user if the preset luminance is not satisfactory for the application.

The invention is not limited to the presented embodiments. Furthermore, it is possible to combine the features of the different embodiments of the invention. By this such combined embodiments are comprised by the invention.

### References

- 10: display
- 12: housing
- 14: base
- 16: frame
- 18: panel
- 20: surrounding area
- 22: back ground lightning
- 24: liquid crystal cell
- 25: pixels
- 26: front pane
- 28: front surface
- 30: radiation component
- 32: sensor
- 34: room area
- 36: control unit
- 38: signal input
- 40: video signal
- 42: PC input
- 44: PC signal
- 46: further signal input
- 48: output signal of 32

- R,G,B: basic colour pixel

## Claims

1. Display (10) with
- a housing (12), and
- a panel (18) which is fixedly arranged inside the housing (12) and comprises a front pane (26), wherein the front pane (26) is designed for the presentation of a picture being visible in a room area (34) in front of the front pane (26),
wherein a sensor (32) is fixedly coupled to the housing (12) or to the panel (18), is arranged in the room area (34) in front of the front pane (26) and is designed to receive the intensity of at least one spectral radiation component (30) of the picture emitted by the panel (18).

2. Display (10) according to claim 1, wherein the sensor (32) is arranged on a front surface (28) of the front pane (26).

3. Display (10) according to claim 1, wherein the housing (12) comprises a frame (16), the panel (18) being arranged inside the frame (16) and the sensor (32) being arranged on the frame (16).

4. Display (10) according to one of the preceding claims, wherein the panel (18) comprises a plurality of pixels (25), and each of the pixels (25) comprises base colour pixels (R, G, B) for the emission of three base colours, and the sensor (32) is designed to receive the intensity of the spectral radiation component (30) of at least one of the three base colours of the picture.

5. Display (10) according to one of the claims 1 to 3, wherein the panel (18) comprises a plurality of pixels (25), and each of the pixels (25) comprises base colour pixels (R, G, B) for the emission of three base colours, and the sensor (32) is designed to receive the intensity of the sum of the spectral radiation components (30) of the three base colours of the picture.

6. Display (10) according to one of the claims 1 to 3, wherein the panel (18) comprises a plurality of pixels (25), and the pixels (25) are designed for the emission of a mixing colour, and the sensor (32) is designed to receive the intensity of the radiation component (30) of the mixing colour of the picture.

7. Display (10) according to one of the preceding claims, wherein the sensor (32) is arranged and designed to receive the intensity of the visible radiation of a surrounding area (20) of the display (10).

8. Display (10) according to one of the preceding claims, with
- a signal input (38) which is designed for the input of a video signal (40),
- a control unit (36) which is electrically coupled with the signal input (38) and which is designed to control the luminosity of the panel (18) depending on the video signal (40),
wherein the sensor (32) is designed for the output of at least one output signal (48) being representative for the intensity of the at least one spectral radiation component (30) of the picture and/or for the intensity of the visible radiation of the surrounding area (20) of the display (10), the sensor (32) being electrically coupled to the control unit (36), and the control unit (36) being designed to control the panel (18) depending on the at least one output signal (48) of the sensor (32).

9. Display (10) according to one of the preceding claims, wherein the panel (18) is a liquid crystal panel.

## Amended claims

### Amended claims in accordance with Rule 137(2) EPC.

**1.** Display (10) with
- a housing (12), and
- a panel (18) which is fixedly arranged inside the housing (12) and comprises a front pane (26), wherein the front pane (26) is designed for the presentation of a picture being visible in a room area (34) in front of the front pane (26),
wherein a sensor (32) is fixedly coupled to the housing (12), is arranged in the room area (34) in front of the front pane (26) and is designed to receive the intensity of at least one spectral radiation component (30) of the picture emitted by the panel (18), and wherein the housing (12) comprises a frame (16), the panel (18) being arranged inside the frame (16), **characterized in that**
the sensor (32) is fixedly arranged on the frame (16) and is arranged and designed to receive the intensity of the visible radiation of a surrounding area (20) of the display (10).

**2.** Display (10) according to claim 1, wherein the panel (18) comprises a plurality of pixels (25), and each of the pixels (25) comprises base colour pixels (R, G, B) for the emission of three base colours, and the sensor (32) is designed to receive the intensity of the spectral radiation component (30) of at least one of the three base colours of the picture.

**3.** Display (10) according to claim 1, wherein the panel (18) comprises a plurality of pixels (25), and each of the pixels (25) comprises base colour pixels (R, G, B) for the emission of three base colours, and the sensor (32) is designed to receive the intensity of the sum of the spectral radiation components (30) of the three base colours of the picture.

**4.** Display (10) according to claim 1, wherein the panel (18) comprises a plurality of pixels (25), and the pixels (25) are designed for the emission of a mixing colour being composed of base colours, and the sensor (32) is designed to receive the intensity of the radiation component (30) of the mixing colour of the picture.

**5.** Display (10) according to one of the preceding claims, with
- a signal input (38) which is designed for the input of a video signal (40),
- a control unit (36) which is electrically coupled with the signal input (38) and which is designed to control the luminosity of the panel (18) depending on the video signal (40),
wherein the sensor (32) is designed for the output of at least one output signal (48) being representative for the intensity of the at least one spectral radiation component (30) of the picture and/or for the intensity of the visible radiation of the surrounding area (20) of the display (10), the sensor (32) being electrically coupled to the control unit (36), and the control unit (36) being designed to control the panel (18) depending on the at least one output signal (48) of the sensor (32).

**6.** Display (10) according to one of the preceding claims, wherein the panel (18) is a liquid crystal panel.
